Europäisches Patentamt

European Patent Office

Office européen des brevets

(19)

(11) Publication number : **0 439 419 A1**

(12) **EUROPEAN PATENT APPLICATION**

(21) Application number : **91500008.7**

(22) Date of filing : **23.01.91**

(51) Int. Cl.$^5$ : **C04B 35/58**

(30) Priority : **23.01.90 ES 9000195**

(43) Date of publication of application :
**31.07.91 Bulletin 91/31**

(84) Designated Contracting States :
**BE DE FR GB IT NL SE**

(71) Applicant : **ERCROS S.A.**
**Avda. de la Diagonal 593-595**
**ES-08014 Barcelona (ES)**

(72) Inventor : **Orgaz Orgaz, Felipe**
**Corregidor Diego de Valderrabano 17**
**E-28030 Madrid (ES)**
Inventor : **Jimenez Plaza, Santiago**
**Mauricio Legendre 5**
**E-28040 Madrid (ES)**
Inventor : **Gamero Briones, Antonio**
**Avda. de Valladolid 77**
**E-28008 Madrid (ES)**

(74) Representative : **Garcia Cabrerizo, Francisco**
**OFICINA GARCIA CABRERIZO S.L. Vitruvio 23**
**E-28006 Madrid (ES)**

(54) **Composite ceramic materials for applications in engineering at high temperature and under severe conditions of thermal shock and a process for their production.**

(57)   Ceramic composite materials for ingineering applications at high temperature and under severe conditions of thermal shock and a process for their production. The formulated and granulated composite material of the invention is prepared and thus composed of an appropriate mixture formed by an $Si_3N_4$ matrix (80-95% by weight), BN (3-15%) and sintering additives, $TiB_2$, $Y_2O_3$, $Al_2O_3$ and $ZrSiO_4$ (10-20%). This formulated mixture, which is shaped by conventional ceramic techniques, gives rise, by sintering, via an optimized thermal cycle in three steps located between 1,300 and 1,400°C between 1,500 and 1,700°C, and between 1,750 and 1,825°C, to ceramic parts which as a whole combine high strength at room temperature with high resistance to thermal shock and high toughness and are suitable for applications in engineering at high temperature and under severe conditions of thermal shock.

FIGURE 4.

# COMPOSITE CERAMIC MATERIALS FOR APPLICATIONS IN ENGINEERING AT HIGH TEMPERATURE AND UNDER SEVERE CONDITIONS OF THERMAL SHOCK AND A PROCESS FOR THEIR PRODUCTION

## FIELD OF THE INVENTION

The present invention relates to a refractory composite material composed of an $Si_3N_4$ matrix, a disperse BN phase and sintering additives composed of $TiB_2$ and a mixture of $Y_2O_3$, $Al_2O_3$ and $ZrSiO_4$, which marterial as a whole has high mechanical strength at room temperature, high resistance to thermal shock and high toughness, and to a process for its production.

## PRIOR ART

Nowadays a wide range of applications in the chemical, metallurgical, aerospace and defence sectors, and the like, require materials which show high thermo-mechanical performance levels under severe conditions, i.e. materials which can be subjected to high changes in temperature without deterioration of their mechanical properties.

From a thermomechanical point of view, two considerations must be taken into account when designing this type of materials :

a) use of materials having high resistance to initial cracks and

b) generation of microstructures capable of stabilising the cracks by virtue of creating obstacles which prevent their propagation.

Initial cracking generated by thermal stress gradients is characterised by the parameter R′ which is given by the expression :

$$R' = \Delta Tc = \frac{\sigma_f (1 - \nu)}{E \, \alpha} \, \lambda \qquad (I)$$

where $\Delta Tc = T_2 - T_1$ is the difference in critical temperature, in which $T_2$ is the temperature at which a sudden drop in resistance occurs and $T_1$ is the ambient temperature of water ; $\sigma_f$ is the fracture stress, E is Young's modulus, $\nu$ is the Poisson ratio, $\alpha$ is the thermal expansion coefficient and $\lambda$ is the thermal conductivity.

The stability to crack propagation is in turn controlled

by the parameter $R''' = K_{IC}^2 (1 + \nu)/2 \, \sigma_f^2 \qquad (2)$

where $K_{IC}$ is the toughness of the material.

Thus, obtaining materials having high resistance to thermal shock involves, in accordance with equations (1) and (2), combining conditions of a low expansion coefficient with a low Young's modulus, high thermal conductivity and high toughness.

The ceramic oxide materials which are resistant to thermal shock include the vitreous lithium alumino-silicate (LAS) ceramics, as well as magnesium alumino-silicate (cordierite) ceramic materials, mullite ($3Al_2O_3.2SiO_2$) and aluminium titanate, and the like. Mullite/aluminium titanate and mullite/cordierite composites, as well as incorporation of mullite, cordierite, PSZ (partially stabilised zircon) and aluminium titanate in various ceramic matrices have likewise been tried and tested more or less successfully.

More recently, the incorporation of disperse phases, such as carbon fibres and "whiskers" and SiC fibres in mullite, aluminium titanate, LAS and magnesia matrices have been studied with a view to various application purposes. Analogously, the incorporation of refractory metals, such as titanium, chromium, tungsten, and the like, have likewise achieved enormous improvements in the thermomechanical properties of the ceramic materials.

Advanced ceramic non-oxide materials which are of great interest for a wide range of structural applications at high temperature are $Si_3N_4$ and SiC. These materials combine high thermal conductivity with a low expansion coefficient and high resistance at room temperature. Due to their refractory nature, they can perform at temperatures of the order of 1,400°C. However, in single-phase materials based on $Si_3N_4$, a loss in resistance at high temperature occurs, due to the presence of an amorphous intergranular phase formed by the sintering additives or aids incorporated (MgO, $Al_2O_3$, $Y_2O_3$ etc.). These losses in resistance at high temperatures do not present a problem in the case of SiC, which is usually sintered at high density at 2,100°C by the addition of small amounts of B or Al and C. It has not been possible to apply this sintering process to $Si_3N_4$, due to the decomposition of $Si_3N_4$ into Si and $N_2$. Despite this limitation, significant progress has been made in the processing of $Si_3N_4$ at near-theoretical densities, considerably reducing the amount of oxide additives, either by sintering at elevated pressure or by hot-pressing or isostatic hot-pressing. Analogously, significant improvements in the system of the composition of soldering additives have made it possible to recrystallise the transitional liquid phase and also to obtain good corrosion resistance. New criteria in the processing design are still being developed.

Another major problem with these materials, especially $Si_3N_4$, is the sudden loss of resistance, which is a result of the unstable crack growth produced by rapid cooling at relatively moderate temperatures ($\Delta Tc \approx 650$-$750°C$), which prevents their use under very severe conditions of thermal shock and high temperatures. These limitations in conjunction with problems of reliability and low toughness are currently restricting the potential use of these materials. One possible solution has been undertaken using the preparation of composite materials with the aid of which, by means of adequate design criteria, it is possible to disperse different phases (dispersing agents) either in the form of particles, continuous fibres or whiskers in the $Si_3N_4$ or SiC materials, in order to match the desired application requirements. For this purpose, $Si_3N_4/SiC$, $Si_3N_4/SiCw$ (where w is a whisker), $Si_3N_4/HfB$, $Si_3N_4/HfC$, $Si_3N_4/WC$, $Si_3N_4/Cr$, W, coated $Si_3N_4/C$ composites, and the like have been prepared. These and other components will allow the long-term operation of these materials at $T > 1,300°C$ and under severe conditions of thermal shock.

BN-reinforced composites having an $Si_3N_4$ matrix have also been taken into consideration. Hexagonal BN as a second disperse phase improves the fracture toughness of these materials by microcracking and/or by mechanisms of particle/crack interaction. The flakes of hexagonal BN contain a plane of easy slippage, and elastic and thermal differences between BN and the matrix produce high local residual stresses, which gives rise to crack/particle interactions and the potential for microcracking. The resistance to thermal shock is also improved by the addition of hexagonal BN, since the Young's modulus and the thermal expansion coefficient decrease, while thermal conductivity and fracture toughness of the component increase. This type of behaviour is in agreement with equations (1) and (2) of the micromechanical theory established by Hasselman and Shaffer and has been confirmed and patented by Mazdiyasni and Ruh (US Patent Application No. 390,829 of 2.7.82) by preparing $Si_3N_4/BN$ composites of high/low modulus of elasticity, which show improved performance with respect to thermal shock. Composites of this type were prepared by hot pressing at $1,750°C$ at BN contents of 5 to 50%, using $CeO_2$ as sintering aid. Using this forming technique, they were able to prepare a material comprising 90 parts of $Si_3N_4$ and 10 parts of BN and having a mechanical bending strength of 330 MPa at $1,000°C$ and of 112 MPa at $1,400°C$.

Shinagawa Refractories Co. and Nippon Kokan KK (JP 84/107,979/8.12.72) prepared $Si_3N_4/BN$ composites by reactive sintering of silicon, which can be used for casting rings in horizontal continuous-casting machines for steel.

Investigators from the Shanghai Institute of Silicates (PCH 85/104,097/25.05.85) developed composites having high resistance to thermal shock for "antenna windows" by dispersing BN fibres in silicon matrices which have a $\Delta Tc$ of $500°C$.

A process for the nitridation of silica by thermal reduction of silica with carbon in the presence of BN has also been patented by Tokuyama Soda Co. (JP 6,308,265/14.01.88) in order to obtain starting materials for the preparation of $Si_3N_4/BN$ composites, using $Y_2O_3$ + MgO as sintering aids.

The main limitation of the patents referred to above is the low mechanical strength of the materials obtained, their relatively low $\Delta Tc$ values and the low stability to oxidation of said materials, due to the continuous porous nature of the resulting materials, which is associated with the reactive sintering process used therein.

The need to form reliable ceramic materials with, as a consequence thereof, near-theoretical densities, in which high mechanical strength can be made compatible with elevated resistance to thermal shock and high toughness in combination with excellent corrosion resistance, has recently redirected the processing design of these materials towards the preparation of said materials from their fundamental components ($Si_3N_4$ and BN) while searching for and minimising those sintering additives which are capable of meeting the desired necessary application requirements.

To this effect, the Patents JP 80/21,070 of 23.02.80 issued in the name of Shinagawa Refractories Co ; JP 86/219,761 A2 of 26.03.85 issued in the name of UBE Industries ; IT 7,769,899 of 23.12.70 issued in the name of Fiat SpA and JP 01,131,062 of 14.11.87 issued in the name of Denki Kagaku Kogyo provide $Si_3N_4/BN$ composites prepared by conventional methods of mixing $Si_3N_4$ and BN in the presence of certain soldering additives. As will be explained in more detail in the description which follows, the novel composite materials of the present invention as a whole have high mechanical strength, elevated resistance to thermal shock and high toughness, among other properties, have been obtained by methods customary for ceramics and are novel with respect to the above-mentioned patents in that different sintering additives are used which are composed of a

suitable mixture of $Al_2O_3$, $Y_2O_3$ and $ZrSiO_4$ and an appropriate amount of $TiB_2$, as a result of which they have a composition which is different from the known ones and give them all the above-mentioned properties.

## BRIEF DESCRIPTION OF THE FIGURES

Figure 1 shows an X-ray diffraction diagram, in which the starting materials used for the preparation of the composite material of the invention are identified.

Figure 2 shows an X-ray diffraction diagram, in which the phases resulting from the sintering of the composite material of the invention (Figure 2a) are identified, as well as the same with a narrow range of the diffraction angle (Figure 2b).

Figure 3 shows the typical microstructure of the composite material of the invention before being sintered, observed by scanning electron microscopy.

Figure 4 shows the typical microstructure of the composite material of the invention after being sintered, observed by scanning electron microscopy, in which the interconnected branches of $\beta$-$Si_3N_4$ can be seen.

Figure 5 shows a comparison of the mechanical strength of various materials, including various specimens of the composite material (CG8B and CB31) of the invention, with respect to $\Delta Tc$.

## BRIEF DESCRIPTION OF THE INVENTION

The present invention provides a process for the preparation of compact ceramic composite materials obtained by processes of forming and conventional ceramic sintering without using hot-pressing or hot isostatic pressing. The ceramic composite materials obtained by the process of the invention, which will be described in detail below, are also novel and also provided by the present invention. These composite materials as a whole have high mechanical strength at room temperature ($\simeq 500$ MPa) and their values of critical temperature difference in thermal shock tests in water ($\Delta Tc$) are greater than 1,100°C. Furthermore, these materials have high toughness values (6-8 MPa $m^{\frac{1}{2}}$) and a hardness of greater than 800 kg/mm². 

The novel composite materials of the invention were obtained by a novel process for preparing a composition, in which BN is dispersed in the $Si_3N_4$ matrix with the aim of reinforcing the structure of the composite by using, as sintering additives, $TiB_2$ and a suitable mixture of $Y_2O_3$, $Al_2O_3$ and $ZrSiO_4$ which is capable of forming a stable liquid soldering phase which leads to materials having a closed porosity of less than 10-12% and having no open porosity, thus giving rise to materials which are suitable for operation under severe conditions of thermal shock and which have high mechanical strength and high toughness.

## DETAILED DESCRIPTION OF THE INVENTION

The invention provides a formulation of a composite material which is suitable for producing articles for applications in engineering at high temperature and under severe conditions of thermal shock as well as a process for its preparation. Analogously, the invention also provides a shaped and sintered finished article which as a whole is endowed or which has high mechanical strength, high resistance to thermal shock and high toughness.

Accordingly, the invention first relates to the preparation of a formulation or mixture which is capable of giving rise, by sintering, to an article endowed with all of the above-mentioned properties. The formulation or composition and microstructure of said mixture is novel and therefore is also provided by this invention.

Secondly, the invention relates to the sintering of a shaped article made from said mixture by means of a specific thermal cycle with the aim of providing the finished article with the resistance and toughness properties mentioned.

The invention furthermore relates to a process for the manufacture of articles endowed as a whole with high mechanical strength, high resistance to thermal shock and high toughness, using the above-mentioned mixtures and sintering cycle.

The process for the manufacture of articles intended for applications in enngineering which operate at high temperatures and under severe conditions of thermal shock and based on the refractory ceramic composite materials of high mechanical and thermal strength and high toughness, of the present invention, basically comprises the following 3 steps :

i) preparing a formulation or mixture of suitable components and in appropriate proportions which is capable of giving rise, by sintering, to a composite material which as a whole combines the above-mentioned properties ;

ii) shaping the desired article ; and

iii) sintering said shaped article by a suitable thermal cycle, whose control is essential for obtaining the desired finished articles having all of the required properties.

The preparation of the formulation or mixture which is capable of giving rise, by sintering, to the novel composite material of the invention comprises, in turn, the following steps :

a) preparing a mixture composed of an $Si_3N_4$ matrix and a disperse phase formed by BN, to which an appropriate amount of $TiB_2$ is added, and adding said mixture to a solvent which contains a dispersing agent and a deflocculating agent, as a result of which a suspension having a low potential Z is obtained which ensures good dispersibility of the components ;

b) adding the remainder of the sintering additives which have been mixed beforehand and are composed of $Y_2O_3$, $Al_2O_3$ and $ZrSiO_4$ to said suspension ;

c) mixing/milling the suspension formed in the previous step in an attrition mill in the presence of plasticising aids and binders, as a result of which a homogeneous and throroughly disperse suspension of all the solid components is obtained ; and

d) drying the suspension without separation by means of atomisation or, alternatively, by drying in an oven with stirring or by means of a rotary evaporator, as a result of which either granules or a paste is/are obtained, which is/are milled, screened and made into pellets to give granules having a particle size of less than 250 μm.

The granules thus obtained, the composition of which is that of the mixture capable of giving, by sintering, a composite material which as a whole combines the properties of high mechanical strength, high resistance to thermal shock and high toughness, can afterwards be shaped, pressed and sintered in order to manufacture articles intended for operation at high temperature and under severe conditions of thermal shock, using a process which will be described below.

As mentioned above, the starting mixture from step a) is composed of an $Si_3N_4$ matrix and a disperse BN phase together with the $TiB_2$ additive in the weight proportions indicated below ;

| Component | % by weigth |
|---|---|
| $Si_3N_4$ | 80–95 |
| BN | 3–15 |
| $TiB_2$ | 1–5 |

These starting materials are commercially available, those having a small particle size (< 0.2 μm) being preferred.

The various components can be dried mixed ; the mixture obtained is then added to an organic solvent containing a dispersing agent and a deflocculating agent. A solvent suitable for carrying out the present invention is methanol since it additionally acts as dispersing agent. It has been observed that a suitable defloccculating agent for the purposes of the present invention is a mixture of 2-amino-2methyl-1-propanol hydrochloride with polyacrylic acid. The amount of deflocculating agent is between 0.1 and 5% by weight, relative to the total amount of solids present.

The suspension resulting from the addition of the above-mentioned starting mixture to the solvent containing the dispersing agent and the deflocculating agent has a low potential Z, which ensures good dispersability of the components.

The remainder of the sintering additives or aids, which are composed of a series of oxides, such as $Y_2O_3$, $Al_2O_3$ and $ZrSiO_4$ in the proportions indicated below, is added to the resulting suspension :

| Additives | % by weight (of total weight) |
|---|---|
| $Y_2O_3$ | 5–15 |
| $Al_2O_3$ | 1–10 |
| $ZrSiO_4$ | 0–5 |

the total contents of soldering additives being between 10% and 20% by weight, relative to the total weight of the solids.

These additives together with the previously added $TiB_2$ aid the sintering process by forming vitreous intergranular soldering phases.

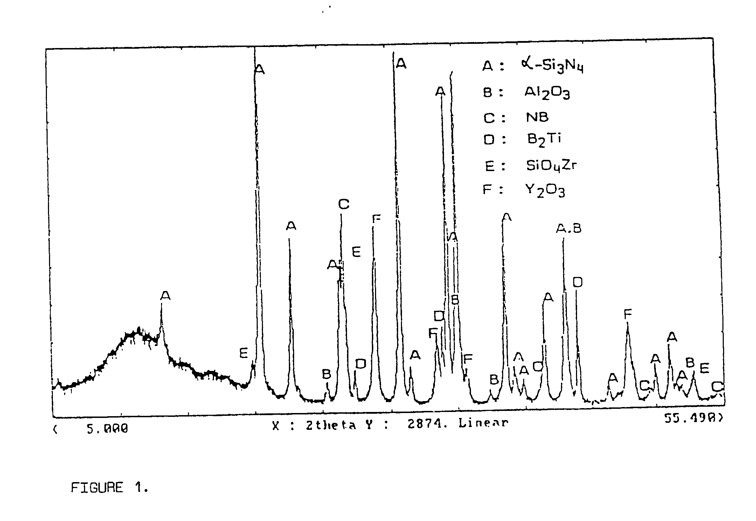

The suspension obtained is then mixed and milled in an attrition mill with the aim of obtaining a homogeneous and thoroughly disperse suspension of all the solid components. The suspension to be milled is kept in an attrition mill for a period of from 1 to 3 hours in the presence of a binder, such as methylcellulose in a proportion of 1 to 10% by weight and a plasticiser, such as polyethylene glycol, in a proportion of 0.1 to 5% by weight. The suspension obtained after the milling is then dried. Drying can be carried out in a conventional manner by atomisation or granulation, as a result of which the granules of the composite arterial of the invention obtained have a particle size between 60 and 250 μm or, alternatively, it can be carried out by drying in an oven at 60°C with stirring or by means of a rotary evaporator. In the latter two cases, a paste or dry composition is obtained, which is milled in a mortar mill for a period of 0.5 to 3 hours, screened and made into pellets to give granules of the composite material of the invention having a size of less than 125 μm. The composition of the granules of the composite material of the invention is one of the novel aspects thereof, since through this composition and by means of the appropriate heat treatment a composite material is obtained which is as a whole endowed with the properties referred to above. In order to identify its components, an X-ray diffraction study has been carried out. A copy of the diffraction diagram obtained accompanies the present description as Figure 1. The peaks of the different components ($Si_3N_4$, $Al_2O_3$, BN, $TiB_2$, $ZrSiO_4$, $Y_2O_3$), which are identified as A, B, C, D, E and F, respectively, can be seen in said figure.

The table which follows lists a few of the properties and characteristics of the granules obtained :
– density : 50-55%
– bulk density : 25-27%
– size : 40-250 μm.

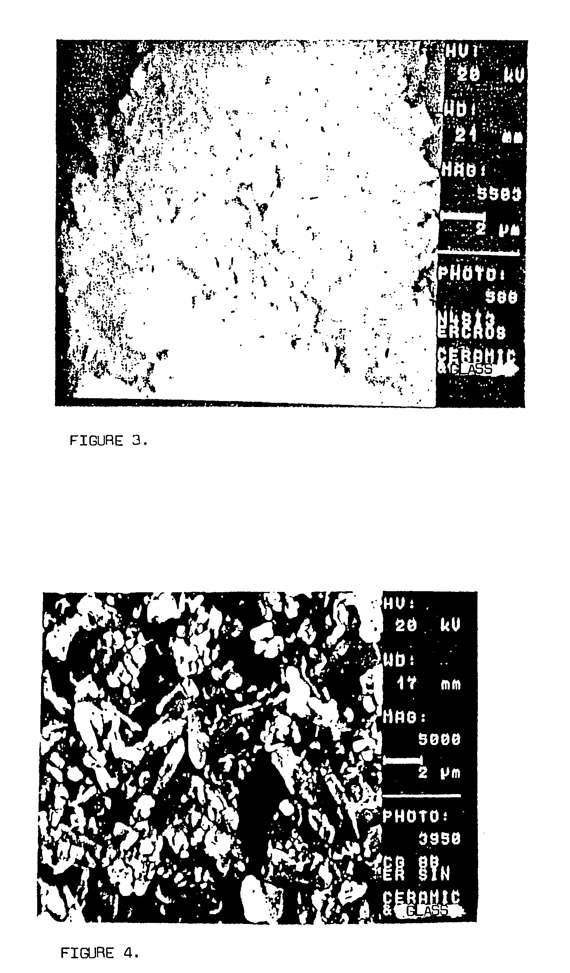

The granules thus obtained are suitable for the subsequent pressing step which precedes the manufacture of a shaped and sintered article. Pressing can be carried out isostatically or uniaxially at a pressure between 1 and 3 tonnes/cm². The above-mentioned thermal sintering circle was optimized as a consequence of rate control sintering experiment using dilatometry. In order to adequately determine and characterise the microstructure and properties of the "green", shaped arterial before it is sintered, a specimen based on the material of the invention was manufactured and viewed through a scanning electron microscope, the result of which is shown in figure 3. Analogously, the following properties of the "green" body were determined :
– density : 2.2-2.3 g/cm³
– total porosity : 34-36%

The shaped composite material was finally subjected to sintering by means of a thermal time temperature cycle. Sintering was carried out in a graphite furnace in an atmosphere of $N_2$ and in the presence of a bed of powdered BN, in order to make evaporation and decomposition of $Si_3N_4$ more difficult and provide the sintered article with a homogeneous surface. Sintering is carried out via a cyclic thermal treatment in 3 steps or levels, the control of which is essential for obtaining the finished article endowed with the properties of toughness, mechanical and thermal strength which will be described below.

The therman sintering cycle is therefore carried out at 3 levels :
a) a particle-reordering level located between 1,300°C and 1,400°C for a period of 5 to 30 minutes ;
b) a dissolution and reprecipitation level of β -$Si_3N_4$ located between 1,550°C and 1,700°C for a period of 0.5 to 12 hours ; and
c) a level of reducing the porosity and compacting located between 1,750°C and 1,825°C for a period of 10 to 120 minutes.

Upon completion of this third level, the shaped article is cooled down to room temperature. Cooling can be carried out in two ways : a) by rapid cooling down to room temperature, or b) by an intermediate step in order to cause recrystallisation of the vitreous soldering phase.

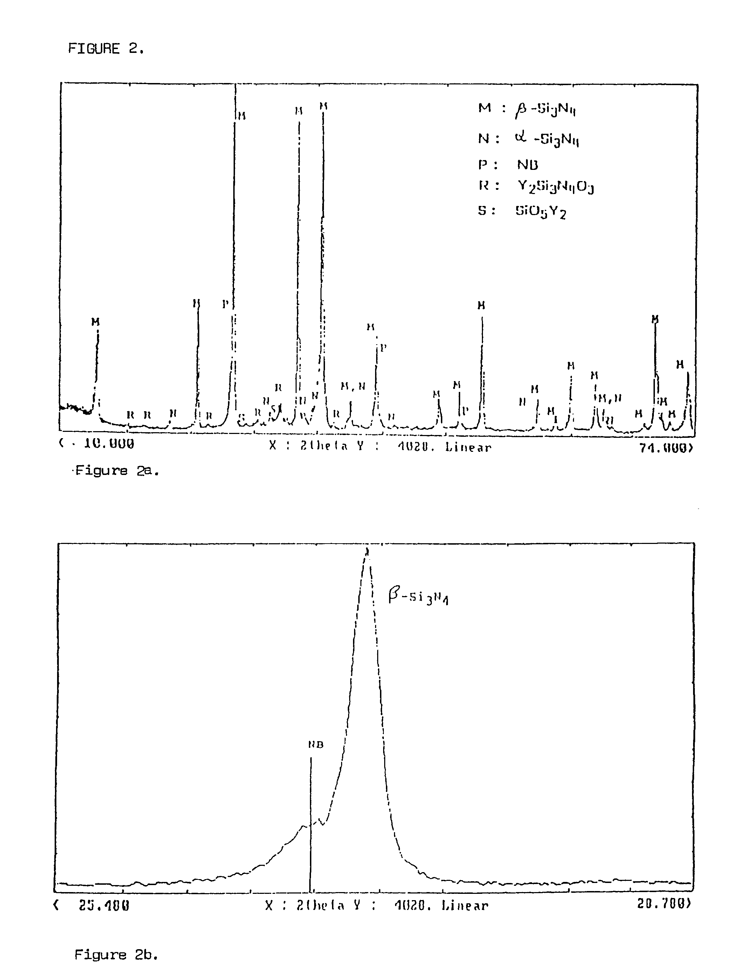

The sintered material thus obtained was studied by X-ray diffraction in order to determine the constituent phases and by scanning electron microscopy in order to determine its microstructure. A copy of the results obtained accompanies the present description in the form of Figures 2 and 4, respectively. Figure 2a shows the diffraction diagram obtained, in which the presence of the following phases can be seen :β -$Si_3N_4$, α -$Si_3N_4$ (minor), BN (disperse phase), $Y_2Si_3N_4O_3$, and yttrium silicate $Y_2SiO_5$, which are identified as M, N, P, R and S, respectively.

A few properties of the sintered material of the present invention have also been determined, the results of which are detailed in the following table :
i) microstructural properties :

$-$ density: 2.95 $g/cm^3$.

$-$ porosity:
  $-$ open: virtually zero
  $-$ closed: 10–12%

ii) technological properties :

$-$ $\Delta T c$ . . . . . . . . . . . . . . . . . . . . . $\simeq$ 1,100°C

$-$ toughness . . . . . . . . . . . . . . . . 6–8 MPa $m^{\frac{1}{2}}$

$-$ mechanical strength . . . . . . . . . >500 $MPa_{(1)}$

400 $MPa_{(2)}$

$-$ modulus of elasticity . . . . . . . 280–300 GPa

$-$ Vickers hardness . . . . . . . . . . . 700–900 $kg/mm^2$

(1) at room temperature

(2) after sudden cooling from 1,100°C in water.

Accordingly, the present invention provides a novel composite material which as a whole combines the favourable properties of high mechanical strength and high resistance to thermal shock with high toughness. Consequently, this material is highly suitable for the manufacture of cast containers for metals, crucibles and stirrer and immersion units for molten metals, nozzles for the horizontal continuous casting of steels, electrical insulators, parts for heat engines, and components having low friction coefficients and low contact potentials, among other articles, and in general for those refractory applications in which high mechanical strength very strict conditions of thermal shock are required.

The examples which follow serve to illustrate particular embodiments of the present invention and should not be considered as limiting.

EXAMPLE 1

Carious mixtures of $Si_3N_4$, BN, $TiB_2$, $Y_2O_3$, $Al_2O_3$ and $ZrSiO_4$ in the amounts (in grams) mentioned in the table below are prepared :

| Mixture | $Si_3N_4$ | BN | $TiB_2$ | $Yi_2O_3$ | $Al_2O_3$ | $ZrSiO_4$ |
|---------|-----------|-----|---------|-----------|-----------|-----------|
| I | 87.0 | – | – | 8.7 | 4.3 | – |
| II | 72.0 | 5 | 7.0 | 7.2 | 5.7 | 2.9 |
| III | 76.5 | 5 | 4.5 | 6.4 | 5.1 | 2.5 |
| IV | 77.0 | 7 | 1.0 | 7.0 | 5.5 | 2.5 |

The general procedure consisted in mixing in the dry state the amounts mentioned in each case of $Si_3N_4$, BN and $TiB_2$ and then adding this premixture to 100 ml of methanol. The respective amounts of $Y_2O_3$, $Al_2O_3$ and $ZrSiO_4$ were then added to give suspensions, to which 5% by weight of a mixture composed of 2-amino-2-methyl-1-propanol hydrochloride with polyacrylic acid was added as a deflocculating agent. The deflocculated suspensions were transferred to an attrition mill, where they were stirred with alumina beads. After 1 hour and 30 minutes, 4.5 g of methylcellulose and 0.15 g of polyethylene glycol (for each suspension) were added and stirring of the suspension was continued for another 2 hours. Each suspension was then dried at 120°C for 18 hours, milled in a mortar mill, screened to a particle size of less tan 250 µm and granulated.

The granulated material of each mixture was used to produce shaped specimens by uniaxial or isostatic cold pressing, which were sintered at a maximum temperature of 1,825°C for 15 minutes, after having previously been pretreated at 1,325°C for about half an hour and at 1,650°C for approximately one hour.

The sintered materials in the form of small cylindrical rods of 5 mm diameter and 60 mm length had the following properties :

| Mixture | Bending resistance (MPa) | $\Delta$Tc ($^\circ$C) | Toughness (MPaxm$^{\frac{1}{2}}$) | Vickers hardness (Kg/mm$^2$) |
|---------|--------------------------|------------------------|-----------------------------------|------------------------------|
| I | 600 | 540 | 5.0 | 1,200 |
| II | 450 | 1,000 | 6.0 | 550 |
| III | 500 | 1,060 | 6.6 | 600 |
| IV | 290 | 800 | 7.0 | 700 |

EXAMPLE 2

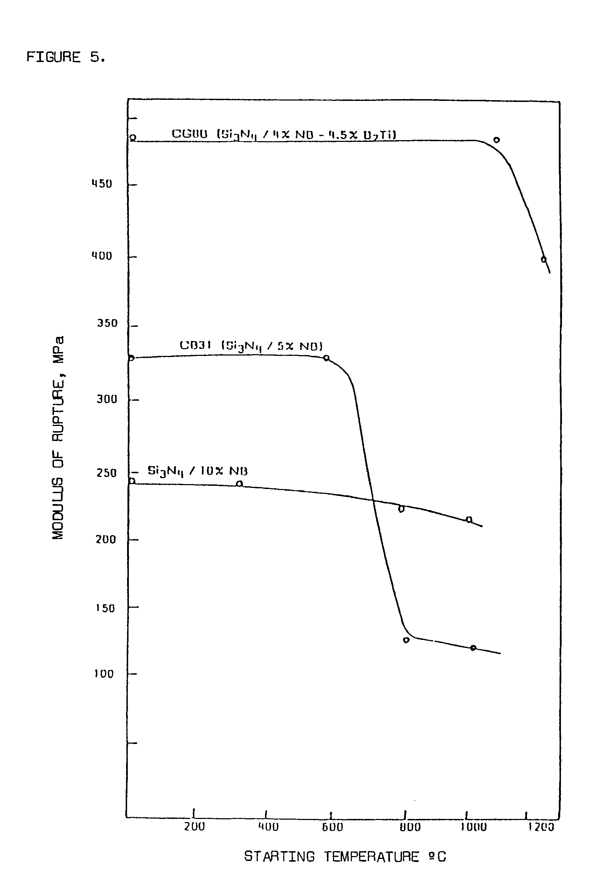

The resistance of the composite material CG85 of the invention was compared with other materials obtained. Figure 5 shows the results obtained, together with the resistance value of the materials compared as a function of $\Delta$Tc. The diagram clearly show the effect that the presence of BN and $TiB_2$ has on the resistance to thermal shock.

Having described the subject-matter of the present invention, it is declared that the essential aspects of the invention are as indicated in the claims which follow.

**Claims**

1. - Process for the preparation of an appropriately formulated and granulated mixture which is capable of giving riser by conventional sintering, to a composite material endowed as a whole with high mechanical strength, high resistance to thermal shock and high toughness, characterised in that it comprises the following steps :

a) preparing a mixture composed of an $Si_3N_4$ matrix and a disperse phase of BN, to which an appropriate amount of $TiB_2$ is added, and adding said mixture to a solvent which contains a dispersing agent and a deflocculating agent, as a result of which a suspension having a low potential Z is obtained which ensures good dispersability of the components ;

b) adding the remainder of the sintering additives which have been mixed beforehand and are composed of $Y_2O_3$, $Al_2O_3$ and $ZrSiO_4$ to said suspension ;

c) mixing/milling the suspension formed in the previous step in an attrition mill in the presence of plasticising aids and binders, as a result of which a homogeneous and thoroughly disperse suspension of all the solid components is obtained ; and

d) drying the suspension without separation by means of atomisation or, alternatively, by drying in an oven with stirring or by means of a rotary evaporator, as a result of which either granules or a paste is/are obtained, which is/are milled, screened and made into pellets to give granules having a particle size of less than 250 μm.

2. - Process according to claim 1, characterised in that the components of the starting mixture of step a) are:
- an $Si_3N_4$ matrix in a proportion of 80% to 95% by weight ; and
- a disperse BN phase in a proportion of 3% to 15% by weight.

3. - Process according to claim 1, characterised in that the solvent is methanol.

4. - Process according to claim 1, characterised in that the deflocculating agent used is a mixture of 2-amino-2-methyl-1-propanol hydrochloride with polyacrylic acid in a proportion of 0.1% to 5% by weight.

5. - Process according to claim 1, characterised in that the sindering additives are composed of a mixture of;
- $TiB_2$ in a proportion of 1% to 5% by weight ;

8

- $Y_2O_3$ in a proportion of 5% to 15% by weight ;
- $Al_2O_3$ in a proportion of 1% to 10% by weight ; and
- $ZrSiO_4$ in a proportion of 0% to 5% by weight,
the total amount of said additives being between 10% and 20% by weight of the total amount of the solids.

6. - A mixture which is capable of giving rise, by sintering, to a composite material endowed as a whole with high mechanical strength, high resistance to thermal shock and high toughness, characterised in that it has the following composition :

| Component | % by weight |
|---|---|
| $Si_3N_4$ | 80–95 |
| BN | 3–15 |
| $TiB_2$ | 1–5 |
| $Y_2O_3$ | 5–15 |
| $Al_2O_3$ | 1–10 |
| $ZrSiO_4$ | 0–5 |

7. - Mixture according to claim 6, characterized in that it is present in granular, completely homogenised and dispersed form and is suitable for being shaped into a solid ceramic body having properties of high mechanical strength, high resistance to thermal shock and high toughness after having been sintered.

8. - Process for the manufacture of shaped and sintered articles based on refractory composite materials of high mechanical strength, high thermal resistance and high toughness, which are suitable for applications in engineering at high temperatures and under severe conditions of thermal shock, characterised in that it comprises the following steps :
   a) preparing a mixture which is capable of giving rise, by sintering, to a composite material equipped as a whole with high mechanical strength, high resistance to thermal shock and high toughness according to the process of claims 1 to 5 ;
   b) shaping the mixture of the previous step into the desired article by conventional pressing techniques, such as uniaxial or cold isostatic pressing ; and
   c) sintering the shaped article by a suitable thermal time/temperature cycle in an $N_2$ atmosphere and in the presence of a bed of powdered BN.

9. - Process according to claim 8, characterised in that sintering of the shaped article is carried out by a thermal sintering cycle at 3 levels composed of :
   a) a paticle-reordering level located between 1,300°C and 1,400°C for a period of 5 to 30 minutes ;
   b) a dissolution and reprecipitation level of $\beta$ -$Si_3N_4$ located between 1,550°C and 1,700°C for a period of 0.5 to 12 hours ; and
   c) a level of reducing the porosity and compacting located between 1,750°C and 1,825°C for a period of 10 to 120 minutes.

10. - Process according to claim 9, characterised in that the sintered material obtained has the following phase composition :
   $\beta$ -$Si_3N_4$ (major), $\alpha$ -$Si_3N_4$, BN, $Y_2Si_3N_4O_3$ and $Y_2SiO_5$, a density of 2.95 g/cm³, an open porosity of virtually zero and a closed porosity of 10-12%.

11. - Process according to claim 10, characterised in that the material of the sintered article obtained additionally has a whole a $\Delta Tc$ of 1,100°C, a mechanical strength of approximately 500 MPa at room temperature and of approximately 400 MPa after sudden cooling from 1,100°C in water, and a toughness of between 6 and 8 $MPaM^{\frac{1}{2}}$.

12. - Sintered composite material endowed as a whole with high mechanical strength, high toughness and high resistance to thermal shock, which can be used in applications in engineering of high mechanical strength under severe conditions of thermal shock, characterised in that it has the following composition :

$\beta$ -$Si_3N_4$ (major), $\alpha$ -$Si_3N_4$, BN, $Y_2Si_3N_4O_3$ and $Y_2SiO_5$.

**13.** - Sintered composite material according to claim 12, characterised in that it additionally has a $\Delta Tc$ of 1,100°C, a mechanical resistance of approximately 500 MPa at room temperature and of 400 MPa after sudden cooling from 1,100°C in water, and a toughness of between 6 and 8 MPa $m^{\frac{1}{2}}$.

**14.** - Sintered composite material according to claim 13, characterised in that it additionally has a Vickers hardness of greater than 800 Kg/mm$^2$.

FIGURE 1.

FIGURE 2.

M : $\beta$-Si$_3$N$_4$

N : $\alpha$-Si$_3$N$_4$

P : NB

R : Y$_2$Si$_3$N$_4$O$_3$

S : SiO$_5$Y$_2$

X : 2theta Y : 1020. Linear

Figure 2a.

$\beta$-Si$_3$N$_4$

NB

X : 2theta Y : 1020. Linear

Figure 2b.

FIGURE 3.

FIGURE 4.

FIGURE 5.

EP 0 439 419 A1

| | European Patent Office | EUROPEAN SEARCH REPORT | Application Number |
| --- | --- | --- | --- |
| | | | EP 91 50 0008 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
| --- | --- | --- | --- |
| Y,D | CHEMICAL ABSTRACTS, vol. 106, no. 22, 1st June 1987, abstract no. 181511t, Columbus, Ohio, US; & JP-A-61 219 761 (UBE INDUSTRIES LTD) 30-09-1986 --- | 1-14 | C 04 B 35/58 |
| Y | CHEMICAL ABSTRACTS, vol. 99, no. 12, 19th September 1983, abstract no. 92704c, Columbus, Ohio, US; & JP-A-58 060 675 (NGK SPARK PLUG CO., LTD) 11-04-1983 --- | 1-11 | |
| Y | US-A-4 370 171 (G.N. ROBINSON et al.) * Claims 1-3,6,8-12 * --- | 4 | |
| Y | DE-A-2 801 474 (TOKYO SHIBAURA ELECTRIC CO., LTD) * Claims 2-10; table II * ----- | 8-14 | |
| | | | TECHNICAL FIELDS SEARCHED (Int. Cl.5) |
| | | | C 04 B 35/00 |

| The present search report has been drawn up for all claims | | |
| --- | --- | --- |
| Place of search THE HAGUE | Date of completion of the search 11-04-1991 | Examiner HAUCK, H.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

15